Europäisches Patentamt

European Patent Office

Office européen des brevets

(19)

(11) Numéro de publication: **0 025 392**
**B1**

## FASCICULE DE BREVET EUROPEEN

(12)

(45) Date de publication du fascicule du brevet: **15.02.84**

(51) Int. Cl.³: **G 21 C 3/34,** G 21 C 3/32

(21) Numéro de dépôt: **80401255.7**

(22) Date de dépôt: **02.09.80**

(54) **Dispositif anti-envol pour assemblage combustible de réacteur nucléaire.**

(30) Priorité: **06.09.79 FR 7922309**

(43) Date de publication de la demande:
**18.03.81 Bulletin 81/11**

(45) Mention de la délivrance du brevet:
**15.02.84 Bulletin 84/7**

(84) Etats contractants désignés:
**BE DE GB IT NL SE**

(56) Documents cités:
**FR - A - 2 049 108**
**FR - A - 2 088 009**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Feutrel, Claude 105, Grande Rue F-91430 Vauhallan (FR)**

(74) Mandataire: **Mongrédien, André et al, c/o BREVATOME 25, rue de Ponthieu F-75008 Paris (FR)**

Courier Press, Leamington Spa, England.

Dispositif anti-envol pour assemblage combustible de réacteur nucléaire

La présente invention a pour objet un dispositif anti-envol pour assemblage combustible de réacteur nucléaire.

Ce dispositif s'applique en particulier à un réacteur nucléaire à eau ordinaire, du genre de ceux qui comportent un faisceau d'éléments combustibles gainés maintenus parallèles entre eux par un ensemble de grilles d'espacement, et une structure rigide formée de deux plaques parallèles, une plaque supérieure et une plaque inférieure, entre lesquelles s'étendent des tirants répartis régulièrement parmi le réseau de ces éléments combustibles.

Comme on le sait, dans les réacteurs nucléaires du genre décrit ci-dessus, les éléments combustibles subissent, sous l'effet de la circulation du milieu liquide de refroidissement s'écoulant à leur contact, une poussée dynamique verticale dirigée de bas en haut, qui devient supérieure au poids de l'assemblage.

Plusieurs dispositifs ont été proposés dans le but d'éviter l'envol de ces éléments combustibles. A titre d'exemple, on connaît un dispositif anti-envol selon lequel la grille inférieure possède, soudés dans sa structure, des manchons longs reposant sur la plaque de pied. Les déplacements de la grille sont bloqués par des corrugations réalisées sur le tube guide et sur le manchon.

On connaît, en particulier par le document FR—A—2 390 804, déposé le 13 mai 1977 au nom du Commissariat à l'Energie Atomique, pour "Assemblage de combustible nucléaire" une structure de grilles d'espacement pour éléments combustibles de réacteurs nucléaires qui permet d'accommoder toutes les déformations sous irradiation aussi bien des grilles que des tirants et des éléments combustibles, le poids de ces derniers étant réparti régulièrement sur la plaque inférieure de la structure grâce à des entretoises tubulaires entourant la base des tirants. Cependant, cette structure n'évite pas l'envol de l'assemblage combustible sous l'effet de la pression dynamique résultant de l'écoulement du milieu liquide de refroidissement s'écoulant au contact des éléments combustibles.

La présente invention a pour objet un dispositif anti-envol qui remédie aux inconvénients de la structure décrite ci-dessus, tout en conservant les avantages qu'elle présente. Ce dispositif permet de bloquer l'envol des éléments combustibles sous l'effet de la circulation du milieu liquide de refroidissement qui s'écoule à leur contact, tout en permettant de conserver les avantages d'une répartition régulière du poids de l'assemblage sur la plaque inférieure et d'une libre dilatation vers le haut des éléments combustibles.

Plus précisément, le dispositif anti-envol pour assemblage combustible de réacteur nucléaire selon la présente invention, ledit réacteur nucléaire comportant un faisceau d'éléments combustibles gainés maintenus parallèles entre eux par un ensemble de grilles d'espacement et une structure, indépendante des éléments combustibles, formée de deux plaques parallèles, une plaque supérieure et une plaque inférieure, entre lesquelles s'étendent des tirants répartis régulièrement parmi le réseau de ces éléments combustibles, des manchons de grilles entourant au moins certains de ces tirants, se caractérise en ce qu'un fourreau, introduit dans les manchons de grille de la grille inférieure autour des tirants et fixé à son extrémité inférieure sur la plaque inférieure, présente à son extrémité supérieure un épaulement externe qui bloque le déplacement vers le haut du manchon de grille, et par suite de la grille inférieure et de l'ensemble de l'assemblage combustible.

D'autres caractéristiques et avantages de l'invention ressortiront mieux de la description qui va suivre, donnée à titre purement illustratif en référence aux dessins annexés sur lesquels:

— la Fig. 1 représente une vue d'ensemble d'une structure de support d'éléments combustibles de réacteur nucléaire comportant un dispositif anti-envol réalisé selon la présente invention;

— la Fig. 2 représente une vue de détail de ce dispositif anti-envol.

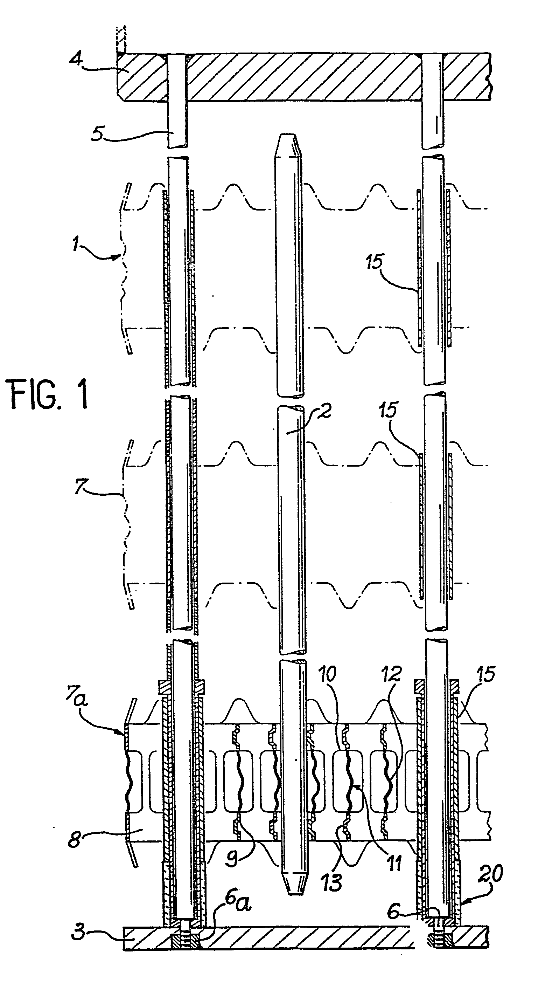

Comme on le voit sur la figure 1, l'assemblage combustible schématiquement représenté est désigné dans son ensemble par la référence 1. Il se compose d'un faisceau d'éléments combustibles gainés 2 à axe vertical, parallèles entre eux. Le faisceau d'éléments combustibles est monté entre deux plaques horizontales, respectivement une plaque inférieure 3 et une plaque supérieure 4, entretoisées mutuellement au moyen d'une série de tirants 5 convenablement répartis dans le faisceau des éléments combustibles 2, notamment en occupant certains des noeuds de ce réseau. Avantageusement, les tirants 5 sont au nombre de vingt-quatre et présentent une dimension diamétrale voisine de celle des éléments combustibles.

Les tirants 5 sont fixés, à leurs extrémités aux plaques d'extrémité, la plaque inférieure 3, et la plaque supérieure 4, afin de constituer une structure rigide. A cette fin, chacun des tirants 5 comporte un embout 6, terminé par un filetage. Un écrou 6a bloque l'embout sur la plaque inférieure 3, rendant ainsi le tirant 5 solidaire de cette dernière.

Le maintien de la géométrie du réseau des éléments combustibles 2 du faisceau par rapport aux tirants 5, est réalisé au moyen de grilles parallèles 7, disposées à intervalles convenables selon la longueur des éléments combustibles. Chacune de ces grilles se compose d'une façon en elle-même connue, de deux familles de tôles, respectivement 8 et 9, s'étendant selon deux directions perpendiculaires pour délimiter entre elles une série d'alvéoles à section carrée, traversés chacun par un des éléments combustibles 2 du faisceau. Les grilles 7 sont rendues solidaires de ces éléments combustibles par une liaison d'appui élastique; à cet effet, ces grilles comportent dans leurs plaques 8 et 9, des évidements centraux 10 dont les bords d'extrémité supérieurs et inférieurs sont reliés par des bandes ondulées 11, présentant dans leur partie médiane un rebord en saillie 12, apte à venir au contact de l'élément combustible 2 traversant l'alvéole correspondant. Les parties supérieure et inférieure des plaques 8 et 9 comportent en outre des bossages 13 sur lesquels s'appuient les éléments combustibles 2 poussés contre ces bossages par les bandes 11. Ces dispositions permettent d'assurer un maintien convenable des grilles 7 par rapport au faisceau des éléments combustibles 2, tout en assurant entre ces organes une liaison coulissante éventuelle. Grâce à ces liaisons, les grilles 7 sont ainsi solidarisées du faisceau des éléments combustibles 2 et suivent ces dernières dans leur déplacement occasionné par les dilatations différentielles, en coulissant en revanche par rapport aux tirants 5.

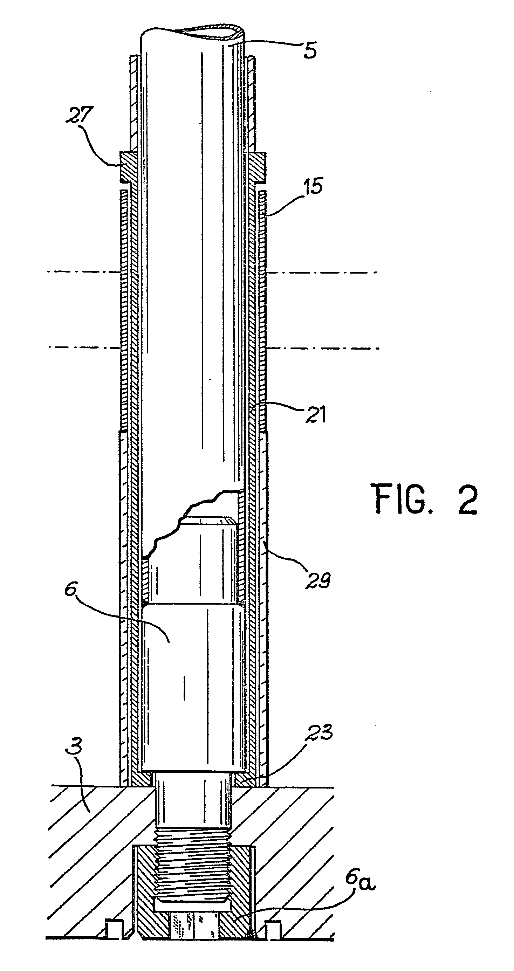

Chaque grille 7, maintenant et supportant le faisceau des éléments combustibles 2 par les organes d'appui 11 et 13, comporte à l'endroit du passage des tirants 5, un manchon de grille 15, soudé sur la grille et traversé librement avec un jeu convenable par le tirant correspondant. La structure de support ainsi réalisée permet d'accommoder toutes les déformations sous irradiation, aussi bien des grilles que des tirants et des éléments combustibles. Cependant, cet ensemble subit une pression dynamique verticale ascendante sous l'effet de la circulation du milieu liquide de refroidissement du réacteur nucléaire. Le dispositif anti-envol désigné par la référence générale 20 réalisé selon la présente invention limite le déplacement vers le haut de la grille inférieure 7a. Une vue de détail de ce dispositif anti-envol est représentée sur la Fig. 2.

Le dispositif anti-envol selon l'invention se compose d'un fourreau 21 introduit dans le manchon de grille 15 de la grille inférieure 7a autour des tirants 5. Le fourreau 21 comporte un épaulement intérieur 23 à son extrémité inférieure, cet épaulement 23 étant bloqué entre l'embout 6 du tirant 5 et la plaque inférieure 3. A son extrémité supérieure, le fourreau anti-envol 21 comporte un épaulement externe 27 qui bloque avec un jeu convenable le déplacement vers le haut du manchon de grille 15. De cette manière, on empêche le déplacement vers le haut de la grille inférieure 7a, et par suite, de l'ensemble de la structure d'assemblage combustible étant donné la grand nombre de liaisons élastiques de chacune des grilles 7 avec les éléments combustibles 2.

La grille inférieure 7a repose sur une série d'entretoises tubulaires 29, entourant le fourreau anti-envol 21, et s'étendant entre les manchons de grille 15a de la grille inférieure 7a, et la plaque inférieure 3. De cette manière, le poids du faisceau d'éléments combustibles repose directement sur la plaque inférieure 3 et est également réparti sur cette dernière, sans imposer de contrainte supplémentaire aux tirants 5. De même, la dilatation des éléments combustibles 2 peut se produire librement.

Ainsi, le dispositif anti-envol selon la présente invention évite le déplacement vers le haut de l'ensemble constitué par les grilles 7 et des éléments combustibles 2 tout en conservant les avantages d'une libre dilatation des éléments combustibles et d'une répartition régulière du poids de l'assemblage sur la plaque inférieure 3.

En outre, la configuration du fourreau anti-envol permet que la grille inférieure soit identique aux autres, ce qui est un avantage économique.

**Revendications**

1. Dispositif anti-envol (20) pour assemblage combustible de réacteur nucléaire, ledit réacteur nucléaire comportant un faisceau d'éléments combustibles gainés (2) maintenus parallèles entre eux par un ensemble de grilles d'espacement (7) et une structure, indépendante des éléments combustibles formée de deux plaques parallèles, une plaque supérieure (4) et une plaque inférieure (3), entre lesquelles s'étendent des tirants (5) régulièrement répartis parmi le réseau de ces éléments combustibles, des manchons de grille (15) entourant au moins certains de ces tirants (5), caractérisé en ce qu'un fourreau (21), introduit dans les manchons de grille (15) de la grille inférieure autour des tirants et fixé à son extrémité inférieure sur la plaque inférieure (3), présente à son extrémité supérieure un épaulement externe (27) qui bloque avec un jeu convenable, le déplacement vers le haut du manchon de grille (15), et par suite de la grille inférieure et de l'ensemble de l'assemblage combustible.

2. Dispositif anti-envol, selon la revendication 1, caractérisé en ce que chacun desdits tirants (5) est terminé par un embout (6) fixé sur la plaque inférieure (3), ledit fourreau anti-envol (21) comportant, à son extrémité inférieure, un épaulement interne (23) bloqué entre la plaque inférieure (3) et l'embout (6) du tirant.

3. Dispositif anti-envol, selon l'une quelconque des revendications 1 et 2, caractérisé en ce que la grille inférieure repose sur une série d'entretoises (29) s'étendant entre la plaque inférieure (3) et les manchons de grille (15) de ladite grille inférieure.

**Patentansprüche**

1. Vorrichtung (20) zum Vermeiden des Herausschleuderns einer Kernreaktorbrennstoffanordnung, wobei der Kernreaktor umfaßt ein Bündel von ummantelten Brennstoffelementen (2), die parallel zueinander durch einen Satz von Abstandsgittern (7) und eine Struktur gehalten sind, die von den Brennelementen unabhängig und von zwei parallelen Platten bebildet ist, nämlich einer oberen Platte (4) und einer unteren Platte (3), zwischen denen sich Stehbolzen zwischen der Anordnung dieser Brennelemente gleichmäßig verteilt erstrecken, sowie Muffen (15) für das Gitter, die zumindest gewisse dieser Stehbolzen (5) umgeben, dadurch gekennzeichnet, daß eine Hülse (21), die in die Muffen (15) für das Gitter des unteren Gitters um die Stehbolzen herum eingeführt und mit ihrem unteren Ende an der unteren Platte (3) befestigt ist, an ihrem oberen Ende eine Außenschulter (27) aufweist, die mit einem geeigneten Spiel eine Verschiebung der Muffe (15) des Gitters nach oben verhindert und infolgedessen des unteren Gitters und der gesamten Kernreaktorbrennstoffanordnung.

2. Vorrichtung nach Anspruch 1, dadurch gekennzeichnet, daß jeder Stehbolzen (5) mit einem Absatz (6) abgeschlossen ist, der an der unteren Platte (3) befestigt ist, und daß die ein Herausschleudern hindernde Hülse (21) an ihrem unteren Ende eine Innenschulter (23) aufweist, die zwischen der unteren Platte (3) und dem Ansatz (6) des Stehbolzens festgelegt ist.

3. Vorrichtung nach Anspruch 1 oder 2, dadurch gekennzeichnet, daß das untere Gitter auf einer Reihe von Abstandshülsen (29) ruht, die sich zwischen der unteren Platte (3) und den Muffen (15) für das Gitter des unteren Gitters erstrecken.

**Claims**

1. An anti-displacement device (20) for a nuclear reactor fuel assembly, the said nuclear reactor comprising a bundle of jacketed fuel elements (2) kept parallel to one another by an assembly of spacer grids (7) and a structure, independent of the fuel elements, formed by two parallel plates, an upper plate (4) and a lower plate (3), between which extend tie-rods (5) spaced uniformly within the lattice of the fuel elements, at least some of these tie-rods (5) being surrounded by grid sleeves (15), characterised in that a sheath (21) introduced into the grid sleeves (15) of the lower grid around the tie-rods and fixed at its lower end to the lower plate (3) has, at its upper end, an external shoulder (27) which blocks with an appropriate clearance upwards displacement of the grid sleeve (15), and consequently of the lower grid and of the entirety of the fuel assembly.

2. An anti-displacement device according to Claim 1, characterised in that each of the said tie-rods (5) terminates in an end-piece (6) fixed on the lower plate (3), the said anti-displacement sheath (21) comprising, at its lower end, an internal shoulder (23) blocked between the lower plate (3) and the end-piece (6) of the tie-rod.

3. An anti-displacement device according to either of Claims 1 and 2, characterised in that the lower grid rests on a series of spacers (29) extending between the lower plate (3) and the grid sleeves (15) of the said lower grid.

FIG. 1

FIG. 2